# EUROPEAN PATENT APPLICATION

(11) **EP 2 781 983 A1**
(43) Date of publication of application: **24.09.2014**
(21) Application number: 13160472.0
(22) Date of filing: 21.03.2013
(51) Int. Cl.: G05D 11/13, G05D 21/02

(54) **Method and apparatus for controlling a fluid treatment apparatus**

(71) Applicant: BRITA Professional GmbH Co. KG, 65232 Taunusstein (DE)
(72) Inventor: Nagel, Thomas, 35796 Weinbach (DE); Conradt, Berthold, 65205 Wiesbaden (DE); Weidner, Peter, 92444 Rötz (DE); Buiter, Joris, 65232 Taunusstein (DE)
(74) Representative: Meissner, Bolte & Partner GbR

(57) **Abstract**

A fluid treatment apparatus (1) includes an outlet (5) for supplying at least partially treated fluid; an adjustable device (8) for adjusting at least one property of the fluid at the outlet (5); and a control system (19,20,22,23) for controlling at least one setting of the adjustable device (8) affecting the property in accordance with a target value. A method of controlling the fluid treatment apparatus (1) includes receiving a signal carrying values representative of at least one of whether and a rate at which fluid is provided to the outlet (5), and determining at least one characteristic of the signal. The characteristic is used to determine the target value.

## Description

The invention relates to a method of controlling a fluid treatment apparatus,
the fluid treatment apparatus including:
an outlet for supplying at least partially treated fluid;
an adjustable device for adjusting at least one property of the fluid at the outlet; and
a control system for controlling at least one setting of the adjustable device affecting the property in accordance with a target value, the method including:
receiving a signal carrying values representative of at least one of whether and a rate at which fluid is provided to the outlet, and
determining at least one characteristic of the signal.
The invention also relates to a system for controlling a fluid treatment apparatus,
the fluid treatment apparatus including:
   an outlet for supplying at least partially treated fluid; and
   an adjustable device for adjusting a property of the fluid at the outlet,
   wherein the system is arranged to control at least one setting of the adjustable device affecting the property in accordance with a target value,
   wherein the system includes an interface for receiving a signal carrying values representative of at least one of whether and a rate at which fluid is provided to the outlet, and
   wherein the system is arranged to determine at least one characteristic of the signal.

The invention also relates to a fluid treatment apparatus.

The invention also relates to a computer program.

US 2012/0024390 A1 discloses a method of operating a water softening plant having an automatically adjustable blending device for mixing a blended water flow comprising a first softened partial flow and a second partial flow which carries untreated water. The water softening plant further has an electronic control device controlling the adjustment position of the blending device by means of one or more experimentally determined current measurement variables in such a manner that the water hardness in the blended water is adjusted to a predetermined desired value. The blending device supplies one or more water removal stations with blended water. The desired value of the blended water hardness to which the control device of the water softening plant adjusts the blending device is determined at a water removal station. The setting of the one or more water removal stations can be changed by an operator, so that the operator can select a desired water hardness by means of the setting. The adjustment is then transmitted to the control device using suitable means (for example via radio or a data line), evaluated and used to control the adjustment position of the blending device so that blended water of the desired hardness can be provided immediately at the water removal station.

A problem of the known method and system is that the appropriate input means must be provided and used at each water removal station, and that a communications network must be installed to communicate the settings.

It is an object of the invention to provide a method, system and computer program of the types defined above in the opening paragraphs that can be implemented without the need to install a user interface at the or each point of use, and which requires relatively little initial configuration by the user whilst providing fluid with properties appropriate to the appliance using the fluid at the point of use.

This object is achieved according to one aspect by the method according to the invention, which is characterised by using the characteristic to determine the target value.

The fluid treatment apparatus is used to treat a fluid so as to adapt its intrinsic properties to a particular application. Such an intrinsic property of the fluid may be any property of the fluid itself that is independent of the dynamics of its flow, thus excluding physical quantities such as pressure, velocity, mass flow rate or volumetric flow rate, which do not characterise the intrinsic properties of the fluid but are dependent on the conditions it is subjected to. It is noted that the term fluid is used to refer to an entire system including both fluid phases and the solids dissolved or suspended therein. The fluid treatment apparatus includes an outlet for supplying at least partially treated fluid to a point of use. The point of use will generally be remote from the fluid treatment apparatus, with the outlet being connected to an appliance at the point of use by means of a conduit. An adjustable device for adjusting a property of the fluid at the outlet is provided to allow the fluid treatment apparatus to be used to supply at least partially treated fluid to any of several different types of appliance at the point or points of use. The control system for controlling at least one setting of the adjustable device affecting the property in accordance with a target value ensures that the property is appropriate to the appliance or appliances concerned. The method is based on the realisation that it is not necessary to provide a separate signal to communicate a target value or information for deriving it from the point of use to the control system of the fluid treatment apparatus. The consumption pattern of an appliance at a point of use in itself provides information regarding the nature of the appliance. It is communicated to the control system in the form of the signal carrying values representative of at least one of whether and a rate at which fluid is provided to the outlet without the need for a separate communications channel. By determining at least one characteristic of the signal it is possible to discern between different types of appliance, which information can be used to determine the target value.

In an embodiment of the method the at least one property is determined by the composition of the fluid.

A target value for this type of property can be determined at the fluid treatment apparatus based on an identification only of the type of application at the point of use, since it is not difficult to ensure that the property undergoes relatively little change on its way to the point of use. By contrast, a property such as temperature is liable to change in dependence on the length and state of insulation of conduits between the fluid treatment apparatus and the point of use. Such variables cannot be determined based on an analysis of a signal carrying values representative of at least one of whether and at what rate fluid is provided to the outlet for supply to the point of use. At the same time, many appliances require fluid to be processed in them to have a composition within a certain range in order to prevent malfunctioning of the appliance. Adjusting the composition therefore serves a useful purpose.

In an embodiment, the target value is a value representative of a value of a parameter of the fluid at the outlet.

In this embodiment, the identification of the type of appliance is not converted directly into a target value of at least one setting of the adjustable device. As a result, the fluid provided to the point of use can be provided more reliably with properties within a target range or at a target value appropriate to the appliance at the point of use. It is for example possible to take calibration data of the adjustable device into account.

A variant of this embodiment includes converting the target value into a target value of at least one of the settings of the adjustable device based on at least one further input.

This variant allows further factors affecting the value of the property for which the settings of the adjustable device can compensate to be taken into account in adjusting the settings of the adjustable device.

In a particular variant, the fluid treatment apparatus includes at least one fluid treatment part and the at least one further input includes at least one of:
an input representative of a measure of effectivity of at least one of the fluid treatment parts; and
a signal representative of a parameter of the fluid dependent on a concentration of at least one component at least partially removable by at least one of the fluid treatment parts.

The effectivity of many types of fluid treatment part can vary over time due to wear or exhaustion of media. It can also vary between individual fluid treatment parts as a result of manufacturing tolerances. Using an input representative of a measure of effectivity of at least one of the fluid treatment parts helps mitigate such influences.

Many types of fluid treatment part for at least partially removing at least one component from fluid are not completely effective, so that the concentration of those components in the treated fluid depends also on the concentration in the fluid before treatment. Using a signal representative of a parameter of the fluid dependent on a concentration of at least one component at least partially removable by at least one of the fluid treatment parts helps ensure that the concentration in the fluid provided at the outlet is nevertheless within a range acceptable for use by an appliance at a point of use.

In an embodiment, the step of determining at least one characteristic includes determining a maximum rate of flow.

This characteristic already allows a distinction to be made between certain types of appliance at a point of use. Where the fluid is, for example, water, an appliance arranged to dispense a beverage will withdraw water at a relatively low rate to avoid splashing or knocking a vessel out of the hands of a user. By contrast a cleaning appliance such as a dishwasher or washing machine will withdraw water at a relatively high rate to speed up the cleaning process.

In an embodiment, the signal is a time-varying signal and the step of determining at least one characteristic includes at least one of:
- determining a frequency of occurrence of a pattern indicative of a withdrawal of a quantity of fluid; and
- determining a duration of a pattern indicative of a withdrawal of a quantity of fluid; and
- determining a measure of an integral of the signal over an interval corresponding to the duration of a pattern indicative of a withdrawal of a quantity of fluid.

Using the example of water again, appliances arranged to dispense beverages prepared from the water will withdraw water relatively frequently. Cleaning appliances or steam cookers will withdraw water relatively infrequently. However, the duration of a withdrawal and thus the volume withdrawn in one go will be relatively small in the case of appliances arranged to dispense beverages compared with those arranged to carry out cleaning or cooking processes.

A pattern in this respect means a particular regularity in a section of the signal. The pattern can be recognised to classify a signal section using any known pattern recognition algorithm. Thus, the frequency of occurrence of signal sections classified as corresponding to a particular pattern can be determined. Similarly, the length of the signal section classified as corresponding to a particular pattern can be determined or the integral of the signal over the length of the signal section corresponding to the pattern.

The characteristic used may also include a further pattern corresponding to a pattern in the frequency of occurrence of the pattern indicative of a withdrawal of a quantity of fluid. Thus variations in the frequency according to the time of day or day of the week can be determined and used to predict the type of appliance at the point of use or the setting in which it is used.

In an embodiment, the fluid treatment apparatus includes an inlet for receiving fluid to be treated, at least one fluid treatment part and a branch point for causing a fraction of fluid received at the inlet to pass along a fluid path to the outlet through at least a certain one of the fluid treatment parts and a remainder to pass along a fluid path to the outlet bypassing the certain one of the fluid treatment parts, and the adjustable device is arranged to adjust a size of the fraction.

Thus, the adjustable setting determines the size of the fraction. This variant is useful where the degree of treatment by the fluid treatment part is not easily or quickly variable. Instead of modulating the degree of treatment, a fraction of the untreated fluid undergoes a fixed degree of treatment and is then mixed with untreated or differently treated fluid. Thus, for example, the concentration of a particular component of the fluid can be adjusted relatively quickly even if the fluid treatment part does not allow for rapid changes in the degree of treatment.

In a variant of this embodiment, the fluid treatment parts include at least one fluid treatment part for at least partially removing at least one component of the fluid.

This variant is a particularly useful application of the principle of mixing untreated and treated fluid to provide a mix with the desired properties. There are many types of fluid treatment for removing components from a fluid which do not make use of an energised device to which the power supplied can be varied.

In a variant, the at least one fluid treatment part for at least partially removing at least one component of the fluid is a liquid treatment part for removing components contributing to temporary hardness in water.

It is relatively easy to monitor the flow of a liquid to an appliance. There are many different types of appliances that use water. The optimum carbonate hardness varies according to the type of appliance, since it also determines the acidity of the water. A different level is appropriate for certain types of appliance for preparing a beverage, such as espresso machines, than for certain other types of appliance such as dishwashers. In a commercial setting, it is common for the same type of fluid treatment apparatus to be used for both types of appliance. Using the methods outlined herein, the control system of the fluid treatment apparatus need not be programmed separately to identify the type of appliance at the point of use. It is also possible to determine that several types of appliance are being supplied by the same fluid treatment apparatus, and to use a target value that is a compromise between the requirements of these appliances.

In a variant, the fluid treatment apparatus includes at least one fluid treatment part including a medium for treatment of the fluid by sorption.

This is a type of fluid treatment part of which the effectivity of treatment cannot be influenced directly. Therefore, using an adjustable device to vary the proportion of treated fluid in a mix of treated and untreated fluid is quite practical.

In a particular variant, the fluid is a liquid and at least one of the fluid treatment parts includes a cation exchange medium at least partly in a hydrogen-form.

An effect is that it is possible to obtain a target value of a parameter of the liquid that can be controlled directly. In particular, the electrical conductivity can be used as an indicator of the concentration of total or carbonate hardness-inducing components in the liquid, and the target value can be a target value for an algorithm for controlling the value of this concentration directly, based on a measurement signal of which the values are representative of at least one of electrical conductivity and electrical conductivity adjusted for a deviation of a temperature of the liquid from a reference temperature. The latter variant is useful because the measurement signal is then independent on activity coefficients, which vary with temperature. A cation exchange medium at least partly in a hydrogen form is configured to give off hydrogen ions in exchange for cations contributing to total or carbonate hardness (depending on the type of ion exchange material). The hydrogen reacts to form water and carbon dioxide, thus leading to a reduction in the total ion concentration. Therefore, the treatment results in a relatively pronounced change in the electrical conductivity. A measurement signal of which the values are representative of at least one of electrical conductivity and electrical conductivity adjusted for a deviation of a temperature of the liquid from a reference temperature is therefore well-suited as a further input to a method of controlling the concentration of components removable by the fluid treatment part.

In an embodiment, the fluid treatment apparatus includes at least one replaceable cartridge including at least one fluid treatment part.

In this embodiment, the fluid treatment part may include an exhaustable medium for at least partially removing at least one component from the fluid. Upon reaching a state of exhaustion, the medium can be replaced relatively easily by an unskilled user for regeneration off-site or for disposal. A variant of the method in which the target value is converted into a target value of at least one of the settings of the adjustable device based on at least an input representative of a measure of effectivity of at least one of the fluid treatment parts is of particular use in this embodiment, because the initial effectivity of the treatment is likely to vary from cartridge to cartridge and also decreases slowly over time.

A variant of this embodiment further includes obtaining data from a machine-readable tag with which the cartridge is provided, and using the data obtained from the machine-readable tag to determine settings of the adjustable device.

This variant can be used to determine whether the cartridge is suitable for the type of appliance at the point of use. The data may also be representative of a current stage in the lifespan of the cartridge, from which the effectiveness of the treatment carried out by the treatment part can be inferred. The data may also include data representative of a capacity of the fluid treatment part included in the cartridge, from which a rate of change in the effectiveness of the treatment can be inferred, e.g. to determine how frequently to re-adjust the settings of the adjustable device. Of course, the current stage in the lifespan of the cartridge can also be inferred, e.g. by summing or integrating the signal carrying values representative of a rate at which fluid is provided to the outlet.

According to another aspect, the system according to the invention is characterised in that the system is arranged to use the characteristic to determine the target value.

The system is thus capable of identifying the type or types of appliances at points of use supplied with at least partially treated fluid by the fluid treatment apparatus. This information is used to select an appropriate target value for use in controlling the adjustable device in order to deliver fluid with the most appropriate properties to the appliances.

In an embodiment, the system is configured to carry out a method according to the invention.

According to another aspect, the fluid treatment apparatus according to the invention includes:
an outlet for supplying at least partially treated fluid;
an adjustable device for adjusting a property of the fluid at the outlet; and
a control system according to the invention.

According to another aspect of the invention, there is provided a computer program including a set of instructions capable, when incorporated in a machine-readable medium, of causing a system having information processing capabilities for controlling a fluid treatment apparatus including an outlet for supplying treated fluid and an adjustable device for adjusting a property of the treated fluid and including an interface for receiving a signal carrying values representative of at least one of whether and a rate at which treated fluid is provided through the outlet to perform a method according to the invention.

The invention will be explained in further detail with reference to the accompanying drawings, in which:
Fig. 1 is a schematic diagram of a water treatment apparatus; and
Fig. 2 is a flow chart illustrating steps in a method of controlling the operation of the water treatment apparatus.

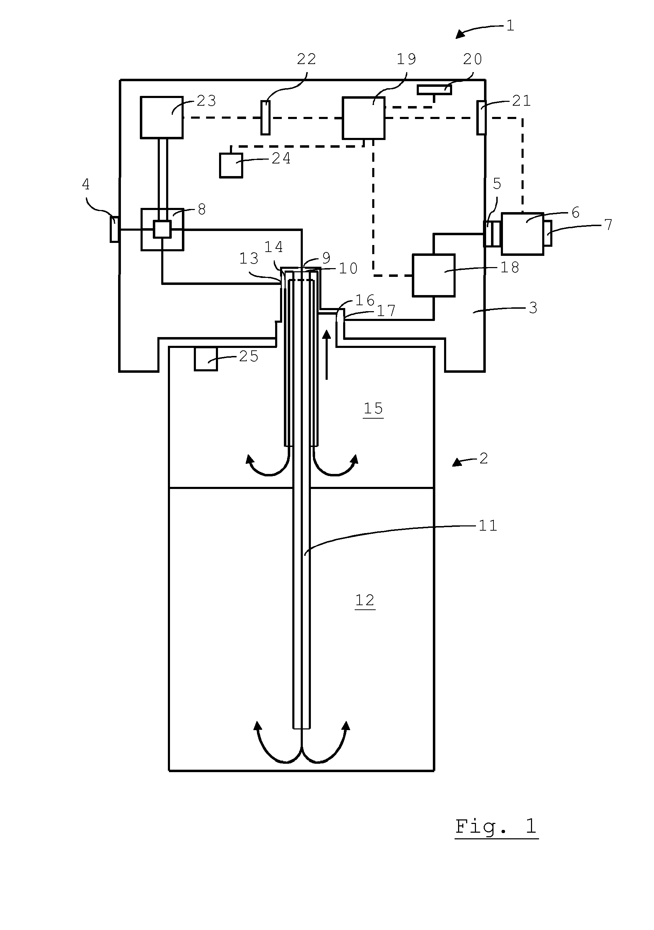

A liquid treatment apparatus 1 (Fig. 1) for treating mains water will be used here as an example of a fluid treatment apparatus. This type of apparatus could also be used for treating other types of liquid, such as syrup for example.

The liquid treatment apparatus 1 includes a replaceable cartridge 2 and a so-called filter head 3. The replaceable cartridge 2 and the filter head 3 are provided with respective mechanical interfaces for connecting the cartridge 2 to the filter head 3 in an essentially liquid-tight manner.

The filter head 3 includes an inlet 4 for connecting the filter head 3 to a source of untreated liquid, in this case the mains water supply. The filter head 3 remains connected when the cartridge 2 is replaced, to which end valves (not shown) are provided to interrupt a flow of liquid through the interface for connection of the cartridge 2.

In an alternative embodiment, the liquid treatment apparatus 1 is connected to or comprises an alternative source of untreated liquid, e.g. in the form of a tank.

The filter head 3 further includes an outlet 5 for supplying at least partially treated liquid. In the illustrated embodiment, the outlet 5 is connected to a measurement module 6 having an outlet 7 for connection to at least one conduit (not shown) for delivering at least partially treated liquid to at least one appliance at a point of use. In an alternative embodiment, the measurement module 6 is integrated in the filter head 3. Possible appliances include steam cookers, devices for the preparation and dispensing of beverages such as tea, coffee or post-mix beverages (cola and the like), dish washers, etc. Depending on the type of appliance and the type of use in the appliance, different demands are placed on the composition of the water. For example, water for preparing beverages should be primarily neutral. Water for dish washers should not be too corrosive, but also as soft as possible.

The untreated liquid is led from the inlet 4 to a variable-ratio flow divider 8 from which two fluid paths lead through the liquid treatment apparatus 1. A first fluid path leads through a first outlet 9 through a first cartridge inlet 10 down a fall tube 11 to a first bed 12 of at least one liquid treatment medium.

The first bed 12 of liquid treatment medium includes liquid treatment medium in particulate form. The liquid treatment medium includes at least one type of ion exchange resin, in particular a cation exchange resin at least partially in the hydrogen form. The cation exchange resin may be of the weakly acidic type. At least initially, the liquid treatment medium is effective to remove essentially all temporary hardness, or carbonate hardness (the two terms are used interchangeably here), from the water passing through it. This means that dissolved calcium carbonate and magnesium carbonate, present in the water in the form of bicarbonates, are removed. The carbonate and magnesium ions are exchanged for hydrogen ions, which react with the bicarbonate ions to form water and CO₂. In the process, the total ion concentration therefore decreases, causing a marked change in the electrical conductivity of the water. The pH of the water is also reduced. At least initially, this effect is somewhat counteracted due to the presence of ion exchange resin loaded with potassium, which is released to act as a buffer.

A second fluid path bypasses the first bed 12. Instead, the water is led from the variable-ratio flow divider 8 through a second outlet 13 of the filter head 3 and a second inlet 14 of the cartridge 2 to a second bed 15 of liquid treatment medium. The second bed 15 of liquid treatment medium is located downstream of the first bed 12 to form a mixing location where the first and second fluid paths join. Thus, the water that has passed through the first bed 12 of liquid treatment medium is mixed with the water that has bypassed the first bed 12. The water that has bypassed the first bed 12 is treated differently or to a different extent compared with the water that has been led through the liquid treatment medium in the first bed 12. This may be due to a different contact time with exactly the same type of liquid treatment medium if the contact time in the second bed 15 is not long enough to remove all components contributing to temporary hardness. However, the liquid treatment medium in the second bed 15 will generally differ in composition from the liquid treatment medium in the first bed 12. For example, the liquid treatment medium in the second bed 15 may be predominantly activated carbon. Alternatively or additionally, it may be a liquid treatment medium for adding components to the water, e.g. minerals.

For simplicity, the water that has been led through the first bed 12 will be referred to herein as "treated", whereas that which has bypassed the first bed 12 will be referred to as "untreated".

The mix of treated and untreated water passes through a cartridge outlet 16 and an inlet 17 of the filter head 3 through a flow meter 18 to the outlet 5 connected to the measurement module 6.

The flow meter 18 is arranged to provide a signal carrying values representative of at least one of a velocity and a volumetric flow rate of the water flowing to the outlet 5. Both alternatives are for present purposes considered to be representative of a rate at which liquid is provided to the outlet 5. In an alternative embodiment, the flow meter 18 provides a signal carrying values representative of the accumulated volume of liquid that has passed it. This signal is then differentiated to provide a signal carrying values representative of a rate at which liquid is provided to the outlet 5.

The operation of the liquid treatment apparatus 1 is controlled by the filter head 3, which includes a data processing unit 19 and memory 20. The data processing unit 19 is provided with an interface for receiving the signal from the flow meter 18.

A further interface 21 is provided for passing a signal from the measurement module 6 to the filter head 3 for processing by the data processing unit 19. The signal carries values representative of one of the electrical conductivity of the water supplied from the outlet 5 and the electrical conductivity adjusted to take account of deviations of temperature from a reference temperature. In the latter case, the values are representative of the values that would have pertained if the water had been at a certain reference temperature, e.g. 25°C. In the former case, the data processing unit 19 may also receive a temperature signal and carry out this adjustment.

The data processing unit 19 is programmed to use the electrical conductivity values or temperature-adjusted electrical conductivity values to adjust the ratio of untreated to treated water in the mix of water provided at the outlet 5 so as to achieve a target value. It is also programmed to derive the target value from an analysis of the signal from the flow meter 18.

The proportion of water led through the second fluid path in the mix of treated and untreated water is referred to as the blending fraction x. It can be varied by adjusting the settings of the variable-ratio flow divider 8, to which end the data processing unit 19 is connected to an interface 22 to an electrical motor 23 or similar actuator. The electrical motor 23 can be a servo motor or a stepper motor augmented by sensors (not shown), for example.

The filter head 3 as illustrated in Fig. 1 is also provided with a device 24 for reading data from a machine-readable tag 25 provided on or in the cartridge 2. In an embodiment, the device 24 for reading data is also capable of writing data to the tag 25 for storage in a non-volatile memory component (not shown) included therein. In the illustrated embodiment, data is read and written wirelessly.

Data stored in the tag 25 may include an identification of the type of the cartridge 2 from which, for example, at least one of the type and characteristics of the medium in the first bed 12 and optionally of that in the second bed 15 can be derived. The data may also include a value representative of the total capacity of the cartridge 2, e.g. in terms of the volume of water that can be passed through the cartridge or more particularly the first bed 12 before the cartridge 2 needs to be replaced. Where data is also written to the tag 25, the data may further include an indication of the current stage in the lifetime of the cartridge 2, e.g. in terms of the treated volume of water or the percentage of the total capacity that has been used up.

The data processing unit 19 is arranged to set the blending ratio x to any desired value within a range, which may be from 0 to 100 % or a smaller range, depending on the construction of the variable-ratio flow divider. In one embodiment, the data processing unit 19 has recourse to calibration data to relate positions of at least one valve element (not shown) in the variable-ratio flow divider 8 to values of the blending fraction x. In this embodiment, the data processing unit 19 may be programmed to cause a method of obtaining such calibration data to be carried out. A suitable method is described in European patent application No. 12182116.9, filed on 29 August 2012 by the same applicant as the present application.

With such calibration data, it does not matter whether the data processing unit 19 sets the settings of the variable-ratio flow divider 8 in accordance with a target value of the settings or a target value of the blending fraction x. Here, it will be assumed that a target value of the blending fraction x is used.

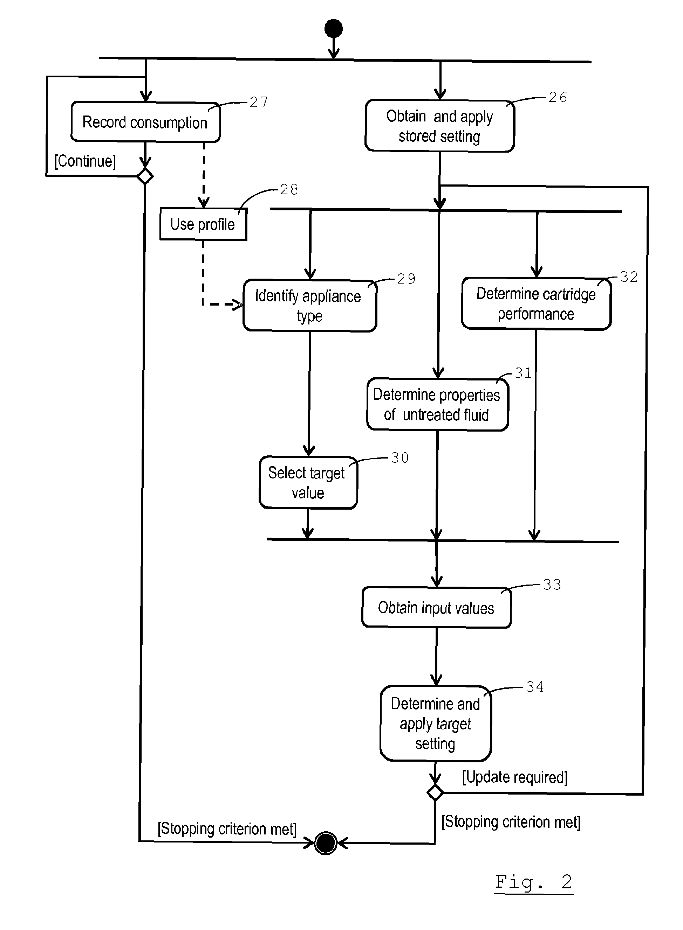

Referring to Fig. 2, when the liquid treatment apparatus 1 has just been installed or upon detecting the presence of a new cartridge 2, a target value of the blending fraction x is obtained from memory 20 and applied (step 26). At the same time, data representative of at least a continuously updated recent section of the signal from the flow meter 18 is recorded (step 27) as a use profile 28 for analysis. This step 27 is repeated continuously until a pre-determined criterion is met. The criterion may be that the liquid treatment apparatus 1 is switched off or the cartridge 2 removed, for example.

The use profile 28 is analysed (step 29) to determine the type or types of appliance using the water provided by the liquid treatment apparatus 1. Based on the type or types identified, a target value of a measure representative of the carbonate hardness of the water provided at the outlet 5 is determined (step 30).

In an embodiment, the type identified is a type from among a number of pre-determined types of which at least one characteristic best matches at least one characteristic derived from the use profile 28. The number of pre-determined types may be as low as two, e.g. appliances for preparing beverages and other types of water-consuming appliance.

Determining at least one characteristic may include determining a maximum rate of flow.

Determining at least one characteristic may include determining a frequency of occurrence of a pattern indicative of a withdrawal of a quantity of fluid, which quantity may be *a priori* unknown. Where the use profile covers a relatively long time interval, a development in the frequency of withdrawal over time may be determined with reference to a time base, e.g. a day or week. Alternatively or additionally, the duration of a pattern indicative of a withdrawal of a quantity of fluid or a measure of an integral of the signal over an interval corresponding to the duration of a pattern indicative of a withdrawal of a quantity of fluid may be determined. These determinations result in a measure of the volume of water withdrawn per single withdrawal. The determinations may be repeated to determine an average. Any or all of these characteristics may be used to determine the best-matching type of appliance. More sophisticated pattern-matching techniques can be used to detect the presence of multiple appliances using water provided by the liquid treatment apparatus 1, including the presence of appliances of different types. In that case, a target value of the carbonate hardness that is a compromise between the different requirements may be selected in accordance with a rule stored in memory 20.

The target value of the carbonate hardness is converted into a target value of the blending fraction x on the basis of further inputs.

As illustrated in Fig. 2, the carbonate hardness of the untreated water is also determined (step 31). This step 31 can be carried out by analysing the signal carrying values representative of one of the electrical conductivity and the electrical conductivity adjusted for deviations from a reference temperature as the blending fraction x is varied. A method of doing this is set out in European patent application No. 12175154.9 filed on 5 July 2012 by the same applicant as the applicant for the present application.

In addition, a measure of the effectiveness of the cartridge 2, more particularly the first bed 12 of liquid treatment medium, in removing components contributing to carbonate hardness from the water is determined (step 32). This step 32 can be based on a measure of the current stage in the lifespan of the cartridge 2. In one embodiment, data indicative of the current stage is written to the tag 25 at regular intervals and read from the tag 25 in the step 32 of determining the effectiveness of the removal of components contributing to carbonate hardness. In another embodiment data representative of an integral of the rate of flow through the first bed 12 is maintained in memory 20 using the signal from the flow meter 18 and knowledge of the settings of the variable-ratio flow divider 8. A pre-determined rule stored in memory 20 or obtained by reading data from the tag 25 relates the stage in the lifetime of the cartridge 2 or the treated volume as indicated by the measure of the integral of the flow rate to a value indicative of the effectiveness of the medium in the first bed 12 in removing components contributing to carbonate hardness.

The most current data as determined in the steps 30-32 described above are obtained (step 33) and used (step 34) to convert the target value of the carbonate hardness into a target value of the blending fraction x, which is then used to adjust the settings of the variable-ratio flow divider 8.

In an optional step (not shown), at least one of the target value of the carbonate hardness and the target value of the blending fraction x is stored in memory 20 for use upon replacement of the cartridge 2 in the associated step 26.

If it is determined that an update of the settings is required, the steps 29-32 to determine these settings are repeated. The trigger for such a repeat may be the passing of a certain volume of liquid through the cartridge 2 or the first bed 12 of liquid treatment medium or the elapse of a certain period of time since a previous update, for example.

By carrying out the steps 29,30 for deriving the target value of the carbonate hardness on the basis of the signal from the flow meter, the need for user input representative of the type of use to which the water provided by the liquid treatment apparatus 1 is to be put is avoided. It is also not necessary to adapt the appliance using the water to allow it to communicate such input data to the filter head 3.

The invention is not limited to the embodiments described above, which may be varied within the scope of the accompanying claims.

For example, an embodiment is conceivable in which the signal from the measurement module 6 is converted into values of the carbonate hardness of the mix of treated and untreated water provided at the outlet 5. This value, or even just the signal from the measurement module 6, is controlled to obtain a target value derived using the steps 29,30 described above.

Also, an embodiment is conceivable in which the various steps 29-32 carried out in parallel are repeated according to different respective criteria, with the subsequent steps 33,34 being repeated according to yet another criterion using the results of the most recent iterations of the preceding steps 29-32.

Instead of using a single variable-ratio flow divider 8 to set the blending fraction x it is also possible to provide a branch point at which first and second fluid paths divide and a variable throttling device in one or both of the fluid paths. Such a device may be situated downstream of the cartridge 2.

Where the step 29 of identifying the appliance type includes only one or more of determining a frequency of occurrence of a pattern indicative of a withdrawal of a quantity of fluid, determining a duration of a pattern indicative of a withdrawal of a quantity of fluid and determining a measure of an integral of the signal over an interval corresponding to the duration of a pattern indicative of a withdrawal of a quantity of fluid, it is not necessary to use a signal representative of a rate at which at least partially treated fluid is supplied to the outlet 5. Instead, a time-varying signal representative of whether fluid is being supplied at all is sufficient.

**LIST OF REFERENCE NUMERALS**

| | |
|---|---|
| 1 | - liquid treatment apparatus |
| 2 | - cartridge |
| 3 | - filter head |
| 4 | - filter head inlet |
| 5 | - filter head outlet |
| 6 | - measurement module |
| 7 | - module outlet |
| 8 | - variable-ratio flow divider |
| 9 | - filter head outlet |
| 10 | - cartridge inlet |
| 11 | - fall tube |
| 12 | - first bed of liquid treatment medium |
| 13 | - filter head outlet |
| 14 | - cartridge inlet |
| 15 | - second bed |
| 16 | - cartridge outlet |
| 17 | - filter head inlet |
| 18 | - flow meter |
| 19 | - data processing unit |
| 20 | - memory |
| 21 | - interface to measurement module |
| 22 | - interface to motor |
| 23 | - motor |
| 24 | - reader for reading data from machine-readable tag |
| 25 | - machine-readable tag |
| 26 | - step (obtain and apply stored setting) |
| 27 | - step (record consumption) |
| 28 | - use profile |
| 29 | - step (identify appliance type) |
| 30 | - step (select target value) |
| 31 | - step (determine properties of untreated fluid) |
| 32 | - step (determine cartridge performance) |
| 33 | - step (obtain input values) |
| 34 | - step (determine and apply setting) |

## Claims

1. Method of controlling a fluid treatment apparatus (1),
the fluid treatment apparatus (1) including:
an outlet (5) for supplying at least partially treated fluid;
an adjustable device (8) for adjusting at least one property of the fluid at the outlet (5); and
a control system (19,20,22,23) for controlling at least one setting of the adjustable device (8) affecting the property in accordance with a target value, the method including:
receiving a signal carrying values representative of at least one of whether and a rate at which fluid is provided to the outlet (5), and
determining at least one characteristic of the signal, **characterised by**
using the characteristic to determine the target value.

2. Method according to claim 1,
wherein the at least one property is determined by the composition of the fluid.

3. Method according to claim 1 or 2,
wherein the target value is a value representative of a value of a parameter of the fluid at the outlet (5).

4. Method according to claim 3
including converting the target value into a target value of at least one of the settings of the adjustable device (8) based on at least one further input.

5. Method according to claim 4,
wherein the fluid treatment apparatus (1) includes at least one fluid treatment part (12,15), and
wherein the at least one further input includes at least one of:
an input representative of a measure of effectivity of at least one of the fluid treatment parts (12,15); and
a signal representative of a parameter of the fluid dependent on a concentration of at least one component at least partially removable by at least one of the fluid treatment parts (12, 15) .

6. Method according to any one of the preceding claims,
wherein the step (29) of determining at least one characteristic includes determining a maximum rate of flow.

7. Method according to any one of the preceding claims, wherein the signal is a time-varying signal and the step (29) of determining at least one characteristic includes at least one of:
- determining a frequency of occurrence of a pattern indicative of a withdrawal of a quantity of fluid; and
- determining a duration of a pattern indicative of a withdrawal of a quantity of fluid; and
- determining a measure of an integral of the signal over an interval corresponding to the duration of a pattern indicative of a withdrawal of a quantity of fluid.

8. Method according to any one of the preceding claims,
wherein the fluid treatment apparatus (1) includes an inlet (4) for receiving fluid to be treated, at least one fluid treatment part (12,15) and a branch point for causing a fraction of fluid received at the inlet (4) to pass along a fluid path to the outlet (5) through at least a certain one (12) of the fluid treatment parts (12,15) and a remainder to pass along a fluid path to the outlet (5) bypassing the certain one (12) of the fluid treatment parts (12,15), and
wherein the adjustable device (8) is arranged to adjust a size of the fraction.

9. Method according to claim 8,
wherein the fluid treatment parts (12,15) include at least one fluid treatment part (12) for at least partially removing at least one component of the fluid.

10. Method according to claim 9, wherein the at least one fluid treatment part (12) for at least partially removing at least one component of the fluid is a liquid treatment part for removing components contributing to temporary hardness in water.

11. Method according to claim 9 or 10,
wherein the fluid treatment apparatus (1) includes at least one fluid treatment part (12,15) including a medium for treatment of the fluid by sorption.

12. System for controlling a fluid treatment apparatus (1),
the fluid treatment apparatus (1) including:
an outlet (5) for supplying at least partially treated fluid; and
an adjustable device (8) for adjusting a property of the fluid at the outlet (5),
wherein the system is arranged to control at least one setting of the adjustable device (8) affecting the property in accordance with a target value,
wherein the system includes an interface for receiving a signal carrying values representative of at least one of whether and a rate at which fluid is provided to the outlet (5), and
wherein the system is arranged to determine at least one characteristic of the signal, **characterised in that**
the system is arranged to use the characteristic to determine the target value.

13. System according to claim 12, configured to carry out a method according to any one of claims 1-11.

14. Fluid treatment apparatus, including:
an outlet (5) for supplying at least partially treated fluid;
an adjustable device (8) for adjusting a property of the fluid at the outlet (5); and
a control system according to claim 12 or 13.

15. Computer program including a set of instructions capable, when incorporated in a machine-readable medium, of causing a system having information processing capabilities for controlling a fluid treatment apparatus (1) including an outlet (5) for supplying treated fluid and an adjustable device (8) for adjusting a property of the treated fluid and including an interface for receiving a signal carrying values representative of at least one of whether and a rate at which treated fluid is provided through the outlet to perform a method according to any one of claims 1-11.
